# EUROPEAN PATENT APPLICATION

(11) **EP 0 842 730 A1**
(43) Date of publication of application: **20.05.1998**
(21) Application number: 97309187.9
(22) Date of filing: 14.11.1997
(51) Int. Cl.: B23K 26/08

(54) **Machine tools**

(30) Priority: 14.11.1996 GB 9623691
(71) Applicant: Simpson, Robert William, Marlow, Buckinghamshire SL7 3JT (GB)
(72) Inventor: Simpson, Robert William, Marlow, Buckinghamshire SL7 3JT (GB)
(74) Representative: Coles, Graham Frederick

(57) **Abstract**

A laser or plasma cutting head (1) and a flat-bed (5) of a hybrid machine tool are driven under numerical control along respective horizontal X- and Y-axes. To cut a tubular workpiece (10), a holder (14) for the tube (10) is mounted on the machine frame (4) beneath the head (1), to rotate with a shaft-mounted disc (15). The disc (15) engages frictionally with a track (16) carried by the bed (5), so as to rotate the holder (14) in synchronism with Y-axis movements of the bed (5). When the diameter of the disc (15) is the same as that of the tube (10), the numerical-control commands required to drive the head (1) and bed (5) to cut curvilinear (17, 18) and straight-line (20) tube-ends, are the same as those for cutting sheet metal in the flat to achieve that same shaping of rolled tube.

## Description

This invention relates to machine tools.

The invention is concerned especially with machine tools of the kind in which a laser or other machining head is moved in a first of two orthogonal axes (X- and Y-axes) and a bed for carrying a workpiece is moved in the second axis.

Machine tools of this specified kind, which are sometimes referred to as hybrid machines, are particularly suited for use in cutting sheet material, the sheet being held flat on the bed to be traversed by the cutting head driven back and forth in said first axis (X-axis) under numeric control while the bed is similarly driven in said second axis (Y-axis), to provide the required configuration of cut across the sheet. However, such machines are not in general currently usable for cutting other than sheet material, without expensive and complex modification. Accordingly, where for example a tube having a contoured end is desired, a machine of the specified kind can normally only be used for the contouring if the tube is formed from sheet material and this is cut in the flat to the appropriate development curve before being rolled into the tube form.

It is one of the objects of the present invention to provide a method by which a machine tool of the specified kind can be readily and economically adapted to cut or otherwise machine tubes and other non-flat workpieces.

According to one aspect of the present invention there is provided a method of adapting a machine tool of the kind specified to machine a non-flat workpiece, characterised in that a workpiece holder is mounted for rotation of the workpiece relative to the head and bed about an axis of rotation which is substantially parallel to said first axis (X-axis) intermediate the head and the bed, and that the holder is driven for rotation of the workpiece about the axis of rotation in synchronism with movement of the bed in said second axis (Y-axis) relative to the holder and head.

According to another aspect of the present invention there is provided a machine tool of the kind specified characterised in that a workpiece holder is mounted for rotation of a workpiece carried by it relative to the head and bed about an axis of rotation which is substantially parallel to said first axis (X-axis) intermediate the head and the bed, and that the holder is driven about the axis of rotation in synchronism with movement of the bed in said second axis (Y-axis) relative to the holder and head.

Rotational drive to the holder in the method and machine of the invention may be derived via a disc or other wheel that engages the bed for rotation in accordance with movement of the bed in said second axis (Y-axis). The wheel may be rotated by frictional engagement with an elongate track on the bed, and may be mounted on a shaft that carries the holder so that the holder is rotated directly with the wheel.

A hybrid cutting machine and a method of adapting it in accordance with the present invention will now be described, by way of example, with reference to the accompanying drawings in which:
Figure 1 is an illustrative side-elevation of part of the machine when adapted in accordance with the invention; and
Figure 2 is an illustrative end-elevation of the part of the adapted machine shown in Figure 1.

Although the machine tool to be described uses a laser cutting-head, a plasma cutting-head may be used instead.

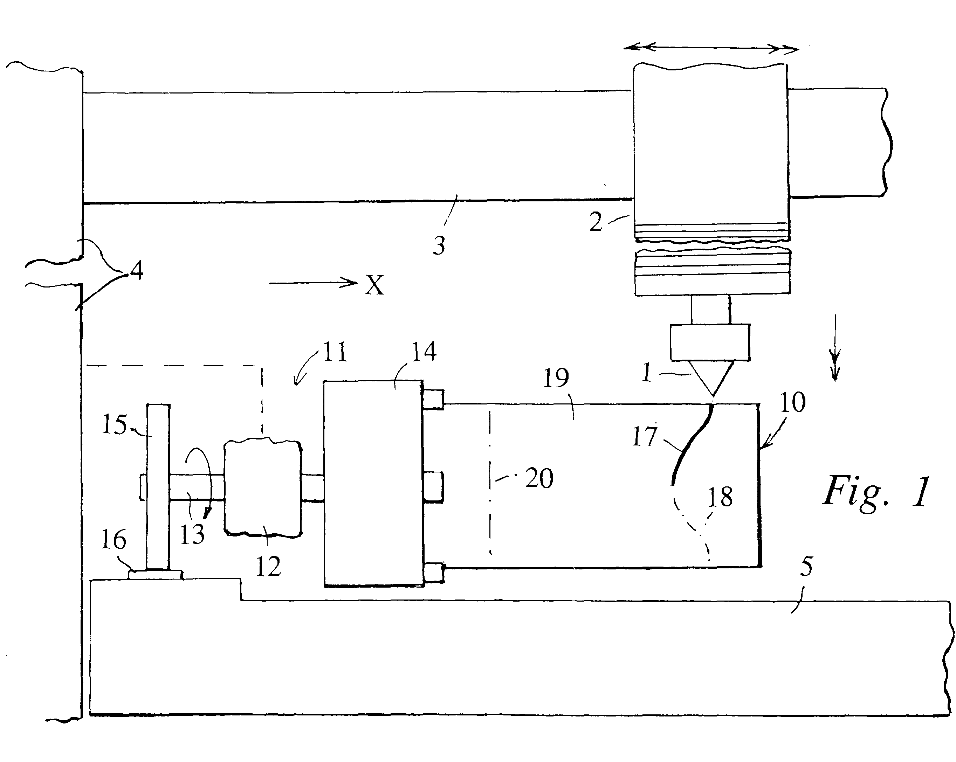

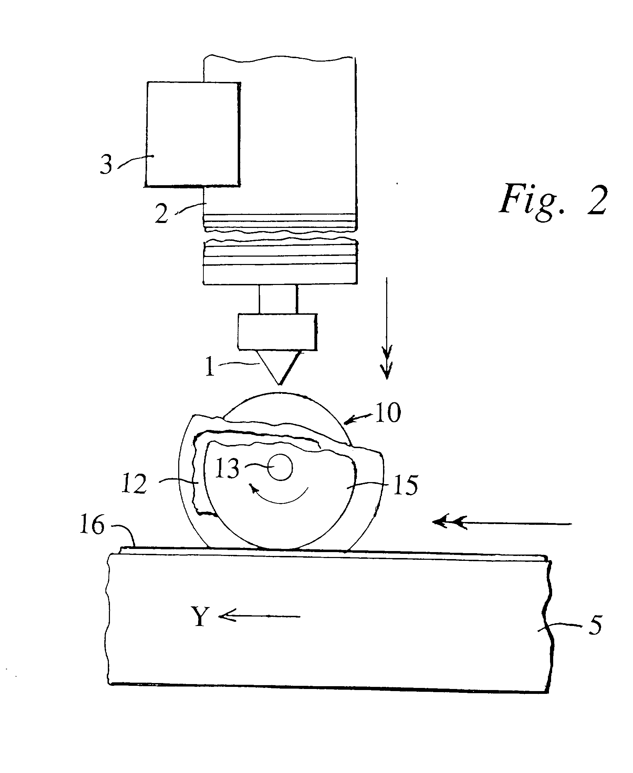

Referring to Figures 1 and 2, the laser-head 1 of the machine is carried by a motor unit 2 on a track 3 of the machine-framework 4. The track 3 extends horizontally over a horizontal, rectangular flat-bed 5 of the machine. The bed 5 is moveable relative to the framework 4 transversely of the track 3, and in conventional operation of the machine, carries a workpiece of flat-sheet form, to be cut by the head 1. The unit 2 carrying the head 1, and the bed 5 are driven under numerical control in accordance with coordinates x and y respectively of the desired location of the head 1 relative to the bed 5, related to orthogonal X- and Y-axes that are defined in the framework 4. The path of the head 1 lengthwise of the track 3 defines the line of the X-axis, the unit 2 being driven back and forth along the track 2 according to the abscissa-values x. The bed 5 is at the same time driven back and forth transversely of the track 2 according to the ordinate-values y.

The head 1 is also driven up and down relative to the track 3 by the unit 2 to locate it close to the upper surface of the workpiece. The gap between the head 1 and the surface of the workpiece is normally required to be small (for example, about 1 mm) throughout cutting, and the machine includes provision (not shown) for driving the head 1 up and down to maintain this, in accordance with capacitance sensing across the gap.

To the extent the machine has so far been described it is of conventional form used for cutting shapes from flat sheet material carried on the bed 5. However, in accordance with the present invention, it can be adapted to cut other forms of workpiece. More particularly, and as shown in the drawings, the adaptation enables the machine to be used to make cuts, and in particular curvilinear cuts, in tubing. The adaptation of the machine in this way will now be described in the context illustrated in the drawings, of cutting a tube 10.

The adaptation of the machine to cut the tube 10 involves an accessory 11 which consists of a mounting 12 for clamping to the framework 4, a shaft 13 rotatably mounted on the mounting 12, a chuck or tube-holder 14 mounted on one end of the shaft 13 and a driving disc 15 mounted on the other end. The mounting 12 is clamped to the framework 4 with the shaft 13 horizontal in the vertical plane containing the path of the head 1 lengthwise of the track 3 (that is to say, in the vertical plane containing the X-axis). In this clamping, the disc 15 is pushed hard down onto a friction track 16 that is secured to the bed 5 running parallel to the Y-axis, so that as the bed 5 is moved the disc 15 and thus the shaft 13 and the tube-holder 14 with it, are rotated accordingly.

The tube 10 is retained fast within the holder 14 in axial alignment with the shaft 13 in the vertical plane of movement of the head 1. The head 1 is brought down to the surface of the tube 10 to begin the cutting operation, and movement of the bed 5 is accompanied by rotation of the disc 15 and thus the tube 10 to extend the resultant cut, shown in Figure 1 as a cut 17, progressively round the cylindrical surface of the tube 10. As the tube 10 turns, so the head 1 is moved lengthwise of the track 2 under numerical control to shape the cut 17 appropriately and complete it as indicated prospectively in Figure 1 by chain-line 18.

The bed 5 may be driven at a constant speed in one direction for a first cutting operation on the tube 10, and then in the opposite direction to carry out a second such operation. More particularly, a section 19 of the stock tube 10 may be cut out in passes forwards and backwards of the bed 5, the curvilinear cut 17 as extended around the full circumference (indicated by line 18), being made to shape one end during a pass in one direction, and a straight cut indicated prospectively by chain-line 20, during the return pass in the opposite direction.

The diameter of the disc 15 determines the relationship between the rotation of the tube 10 and the movement of the bed 5. Where the disc-diameter is the same as that of the tube 10, there is a 1:1 relationship between the circumferential displacement of the tube 10 and the linear displacement of the bed 5 that caused it. Accordingly, in these circumstances there is the advantage that the numerical-control commands of the head 1 and bed 5 required to cut the tube 10 to any shape, whether curvilinear or straight-line, are the same as would have been required to cut sheet metal in the flat, to achieve the same shape of rolled tube.

Driving discs of different diameters may be provided to accommodate the cutting of tubes of different diameters, the thickness of the track 16 being adjusted where appropriate to maintain adequate frictional drive in all cases. Alternatively, the mounting 12 may be carried on the framework 4 by an assembly (not shown) that enables the height of the shaft 13 above the bed 5 to be adjusted by means of a screw to accommodate whatever diameter of disc is required.

Although the use of a 1:1 relationship between the diameter of the tube 10 and the driving disc 15 has significant advantage, application of the invention is not limited to such situations.

## Claims

1. A method of adapting a machine tool in which a laser or other machining head (1) is moved in a first of two orthogonal axes (X,Y) and a bed (5) for carrying a workpiece is moved in the second axis (Y), to machine a non-flat workpiece (10), characterised in that a workpiece holder (14) is mounted for rotation of the workpiece (10) relative to the head (1) and bed (5) about an axis of rotation (13) which is substantially parallel to said first axis (X) intermediate the head (1) and the bed (5), and that the holder (14) is driven for rotation of the workpiece (10) about the axis of rotation (13) in synchronism with movement of the bed in said second axis (Y) relative to the holder (14) and head (1).

2. A method according to Claim 1 wherein drive for rotating the holder (14) is derived via a disc or other wheel (15) that engages the bed (5) for rotation in accordance with movement of the bed (5) in said second axis (Y).

3. A method according to Claim 2 wherein the wheel (15) is rotated by frictional engagement of the wheel (15) with an elongate track (16) on the bed (5).

4. A method according to Claim 2 or Claim 3 wherein the wheel (15) is mounted on a shaft (13) to rotate the shaft (13) directly with the wheel (15), and the holder (14) is carried by the shaft (13).

5. A machine tool in which a laser or other machining head (1) is moved in a first of two orthogonal axes (X,Y) and a bed (5) for carrying a workpiece is moved in the second axis (Y), characterised in that a workpiece holder (14) is mounted for rotation of a workpiece (10) carried by it relative to the head (1) and bed (5) about an axis of rotation (13) which is substantially parallel to said first axis (X) intermediate the head (1) and the bed (5), and that the holder (14) is driven about the axis of rotation (13) in synchronism with movement of the bed (5) in said second axis (Y) relative to the holder (14) and head (1).

6. A machine tool according to Claim 5 wherein drive for rotating the holder (14) is derived via a disc or other wheel (15) that engages the bed (5) for rotation in accordance with movement of the bed (5) in said second axis (Y).

7. A machine tool according to Claim 6 wherein the wheel (15) is rotated by frictional engagement of the wheel (15) with an elongate track (16) on the bed (5).

8. A machine tool according to Claim 6 or Claim 7 wherein the wheel (15) is mounted on a shaft (13) to rotate the shaft (13) directly with the wheel (15), and the holder (14) is carried by the shaft (13).
